# EUROPÄISCHE PATENTSCHRIFT

(11) **EP 1 980 013 B1**
(45) Veröffentlichungstag und Bekanntmachung des Hinweises auf die Patenterteilung: **24.02.2010**
(21) Anmeldenummer: 06817751.8
(22) Anmeldetag: 14.12.2006
(51) Int. Cl.: H02M 7/48, H02M 7/797

(54) **SCHALTZELLE SOWIE UMRICHTERSCHALTUNG ZUR SCHALTUNG EINER VIELZAHL VON SPANNUNGSNIVEAUS**
SWITCHGEAR CELL AND CONVERTER CIRCUIT FOR SWITCHING A LARGE NUMBER OF VOLTAGE LEVELS
CELLULE DE COMMUTATION ET CIRCUIT CONVERTISSEUR POUR LA CONNEXION D'UNE PLURALITÉ DE NIVEAUX DE TENSION

(30) Priorität: 01.02.2006 EP 06405047
(43) Veröffentlichungstag der Anmeldung: 15.10.2008
(73) Patentinhaber: ABB Research Ltd, 8050 Zürich (CH)
(72) Erfinder: PONNALURI, Srinivas, CH-5417 Untersiggenthal (CH); HÄDERLI, Christoph, CH-8047 Zürich (CH)
(74) Vertreter: ABB Patent Attorneys
(86) Internationale Anmeldenummer: PCT/CH2006/000699
(87) Internationale Veröffentlichungsnummer: WO 2007/087732

(56) Entgegenhaltungen:
- WO-A-03/017457
- DE-C1- 10 061 589
- US-A- 5 493 134
- XIAOMING YUAN ET AL: "Soft-Switched Three-Level Capacitor Clamping Inverter with Clamping Voltage Stabilization" IEEE TRANSACTIONS ON INDUSTRY APPLICATIONS, IEEE SERVICE CENTER, PISCATAWAY, NJ, US, Bd. 36, Nr. 4, Juli 2000 (2000-07), XP011022818 ISSN: 0093-9994
- FANG ZHENG PENG: "A Generalized Multilevel Inverter Topology with Self Voltage Balancing" Bd. 37, Nr. 2, 1. März 2001 (2001-03-01), Seiten 611-618, XP011022945 ISSN: 0093-9994

## Beschreibung

### Technisches Gebiet

Die Erfindung bezieht sich auf das Gebiet der Umrichterschaltungen. Sie geht aus von einem einer Schaltzelle sowie von einer Umrichterschaltung zur Schaltung einer Vielzahl von Spannungsniveaus gemäss den Oberbegriffen der unabhängigen Ansprüche.

### Stand der Technik

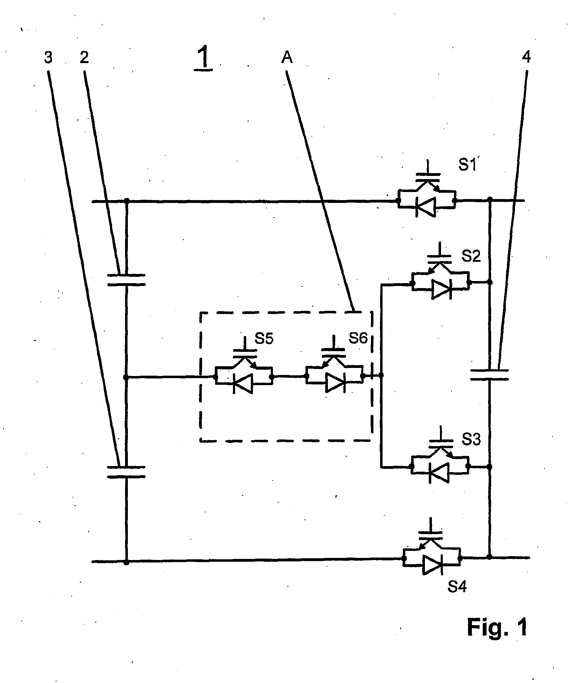

Leistungshalbleiterschalter werden derzeit vermehrt in der Umrichtertechnik und insbesondere in Umrichterschaltungen zur Schaltung einer Vielzahl von Spannungsniveaus eingesetzt. Eine solche Umrichterschaltung zur Schaltung einer Vielzahl von Spannungsniveaus ist in "A Generalized Multilevel Inverter Topology with Self Voltage Balancing", IEEE Transactions on Industry Applications, Vol. 37, No. 2, March /April 2001 angegeben. Darin ist in Fig. 1 bezüglich der Umrichterschaltung zur Schaltung von beispielsweise drei Spannungsniveaus eine Schaltzelle angegeben, die einen ersten Energiespeicher und einen zu dem ersten Energiespeicher in Serie geschalteten zweiten Energiespeicher aufweist. Desweiteren weist die Schaltzelle einen ersten, zweiten, dritten und vierten Leistungshalbleiterschalter auf, wobei der erste, zweite, dritte und vierte Leistungshalbleiterschalter jeweils ein ansteuerbarer bidirektionaler Leistungshalbleiterschalter mit gesteuerter unidirektionaler Stromführungsrichtung ist und der erste, zweite, dritte und vierte Leistungshalbleiterschalter in Serie geschaltet ist und der erste Leistungshalbleiterschalter mit dem ersten Energiespeicher und der vierte Leistungshalbleiterschalter mit dem zweiten Energiespeicher verbunden ist. Der Verbindungspunkt des zweiten Leistungshalbleiterschalters mit dem dritten Leistungshalbleiterschalters ist mit dem Verbindungspunkt des ersten Energiespeichers mit dem zweiten Energiespeicher, insbesondere unmittelbar, verbunden. Ferner ist ein dritter Energiespeicher mit dem Verbindungspunkt des ersten Leistungshalbleiterschalters mit dem zweiten Leistungshalbleiterschalter und mit dem Verbindungspunkt des dritten Leistungshalbleiterschalters mit dem vierten Leistungshalbleiterschalter verbunden.

Problematisch bei einer Umrichterschaltung auf Basis einer Schaltzelle nach "A Generalized Multilevel Inverter Topology with Self Voltage Balancing", IEEE Transactions on Industry Applications, Vol. 37, No. 2, March /April 2001 ist, dass sich bei einer beispielsweise gewünschten höheren Anzahl an zu schaltenden Spannungsniveaus, wie beispielsweise fünf oder sieben Spannungsniveaus, die Anzahl notwendiger Leistungshalbleiterschalter und die Anzahl notwendiger Energiespeicher signifikant erhöht, wie in Fig. 1 nach "A Generalized Multilevel inverter Topology with Self Voltage Balancing", IEEE Transactions on Industry Applications, Vol. 37, No. 2, March /April 2001 gezeigt. Damit einher geht ein sehr hoher Schaltungsaufwand und bezüglich der Leistungshalbleiterschalter auch ein sehr höher Ansteueraufwand, woraus typischerweise eine erhöhte Störanfälligkeit und damit eine geringe Verfügbarkeit resultiert. Zudem benötigt eine solche Umrichterschaltung ein hohes Mass an Platz.

In "Soft-Switched Three-Level Capacitor Clamping Inverter with Clamping Voltage Stabilization", IEEE Transactions on Industry Applications, Vol 36, No. 4, July/August 2000 ist auch eine Schaltzelle mit einem ersten Energiespeicher und einem zu dem ersten Energiespeicher in Serie geschalteten zweiten Energiespeicher und mit einem ersten, zweiten, dritten und vierten Leistungshalbleiterschalter offenbart, wobei der erste, zweite, dritte und vierte Leistungshalbleiterschalter jeweils ein ansteuerbarer bidirektionaler Leistungshalbleiterschalter mit gesteuerter unidirektionaler Stromführungsrichtung ist und der erste, zweite, dritte und vierte Leistungshalbleiterschalter in Serie geschaltet ist und der erste Leistungshalbleiterschalter mit dem ersten Energiespeicher und der vierte Leistungshalbleiterschalter mit dem zweiten Energiespeicher verbunden ist. Weiterhin ist ein dritter Energiespeicher vorgesehen, welcher mit dem Verbindungspunkt des ersten Leistungshalbleiterschalters mit dem zweiten Leistungshalbleiterschalter und mit dem Verbindungspunkt des dritten Leistungshalbleiterschalters mit dem vierten Leistungshalbleiterschalter verbunden ist. Ferner ist ein Schaltelement mit gesteuerter bidirektionaler Stromführungsrichtung vorgesehen, welches über eine erste Induktivität und einen ersten Transformator mit dem Verbindungspunkt des zweiten mit dem dritten Leistungshalbleiterschalter verbunden ist und welches über eine zweite Induktivität und einen zweiten Transformator mit dem Verbindungspunkt des ersten Energiespeichers mit dem zweiten Energiespeicher verbunden ist

### Darstellung der Erfindung

Aufgabe der Erfindung ist es deshalb, eine Schaltzelle anzugeben, mit welcher eine einfache und robuste Umrichterschaltung zur Schaltung einer Vielzahl von Spannungsniveaus mit einer geringen Anzahl an Bauelementen realisiert werden kann, die zudem mit einem geringen Platzbedarf auskommt. Darüber hinaus ist eine solche Umrichterschaltung anzugeben. Diese Aufgaben werden durch die Merkmale des Anspruchs 1 und 14 gelöst. In den abhängigen Ansprüchen sind vorteilhafte Weiterbildungen der Erfindung angegeben.

Die erfindungsgemässe Schaltzelle zur Schaltung einer Vielzahl von Spannungsniveaus weist einen ersten Energiespeicher und einen zu dem ersten Energiespeicher in Serie geschalteten zweiten Energiespeicher auf. Desweiteren weist die Schaltzelle einen ersten, zweiten, dritten und vierten Leistungshalbleiterschalter auf, wobei der erste, zweite, dritte und vierte Leistungshalbleiterschalter jeweils ein ansteuerbarer bidirektionaler Leistungshalbleiterschalter mit gesteuerter unidirektionaler Stromführungsrichtung ist und der erste, zweite, dritte und vierte Leistungshalbleiterschalter in Serie geschaltet ist und der erste Leistungshalbleiterschalter mit dem ersten Energiespeicher und der vierte Leistungshalbleiterschalter mit dem zweiten Energiespeicher verbunden ist. Ferner ist ein dritter Energiespeicher mit dem Verbindungspunkt des ersten Leistungshalbleiterschalters mit dem zweiten Leistungshalbleiterschalter und mit dem Verbindungspunkt des dritten Leistungshalbleiterschalters mit dem vierten Leistungshalbleiterschalter verbunden. Erfindungsgemäss ist nun ein Schaltelement mit gesteuerter bidirektionaler Stromführungsrichtung unmittelbar mit dem Verbindungspunkt des zweiten mit dem dritten Leistungshalbleiterschalter und unmittelbar mit dem Verbindungspunkt des ersten Energiespeichers mit dem zweiten Energiespeicher verbunden. Mit Vorteil lässt sich damit der Strom am Verbindungspunkt des ersten Energiespeichers mit dem zweiten Energiespeicher in bidirektionaler Richtung einstellen beziehungsweise regeln. Zudem lässt sich mittels der erfindungsgemässen Schaltzelle eine Umrichterschaltung realisieren, welche in Verbindung mit Leistungshalbleiterschaltern der Umrichterschaltung beispielsweise fünf und sieben Spannungsniveaus schalten, ohne dass die Anzahl von anzusteuernden schaltenden Elementen der Umrichterschaltung insgesamt signifikant erhöht werden muss. Desweiteren bleibt die Anzahl Energiespeicher mit Vorteil unverändert. Der Schaltungsaufwand einer solchen Umrichterschaltung kann mit der erfindungsgemässen Schaltzelle demzufolge gering gehalten werden, wobei der Ansteueraufwand bezüglich der schaltenden Elemente zudem ebenfalls gering gehalten werden kann. Damit ist eine solche Umrichterschaltung mit der erfindungsgemässen Schaltzelle insgesamt sehr einfach aufgebaut, wenig störanfällig und benötigt ein Minimum an Platz.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Schaltzelle,
- Fig. 2: eine erste Ausführungsform einer erfindungsgemässen Umrichterschaltung zur Schaltung einer Vielzahl von Spannungsniveaus mit einer Schaltzelle nach Fig. 1,
- Fig. 2a: eine zweite Ausführungsform der erfindungsgemässen Umrichterschaltung zur Schaltung einer Vielzahl von Spannungsniveaus mit einer zweiten Ausführungsform der erfindungsgemässen Schaltzelle,
- Fig. 3: eine dritte Ausführungsform der erfindungsgemässen Umrichterschaltung zur Schaltung einer Vielzahl von Spannungsniveaus mit einer dritten Ausführungsform der erfindungsgemässen Schaltzelle,
- Fig. 4: eine vierte Ausführungsform der erfindungsgemässen Umrichterschaltung zur Schaltung einer Vielzahl von Spannungsniveaus mit einer vierten Ausführungsform der erfindungsgemässen Schaltzelle,
- Fig. 5: eine fünfte Ausführungsform der erfindungsgemässen Umrichterschaltung zur Schaltung einer Vielzahl von Spannungsniveaus mit einer fünften Ausführungsform der erfindungsgemässen Schaltzelle,
- Fig. 6: eine sechste Ausführungsform der erfindungsgemässen Umrichterschaltung zur Schaltung einer Vielzahl von Spannungsniveaus mit einer sechsten Ausführungsform der erfindungsgemässen Schaltzelle,
- Fig. 7: eine siebte Ausführungsform der erfindungsgemässen Umrichterschaltung zur Schaltung einer Vielzahl von Spannungsniveaus mit einer siebten Ausführungsform der erfindungsgemässen Schaltzelle,
- Fig. 7a: eine achte Ausführungsform einer erfindungsgemässen Umrichterschaltung zur Schaltung einer Vielzahl von Spannungsniveaus mit einer achten Ausführungsform der erfindungsgemässen Schaltzelle,
- Fig. 8: eine neunte Ausführungsform der erfindungsgemässen Umrichterschaltung zur Schaltung einer Vielzahl von Spannungsniveaus mit einer neunten Ausführungsform der erfindungsgemässen Schaltzelle und
- Fig. 8a: eine zehnte Ausführungsform der erfindungsgemässen Umrichterschaltung zur Schaltung einer Vielzahl von Spannungsniveaus mit einer zehnten Ausführungsform der erfindungsgemässen Schaltzelle.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

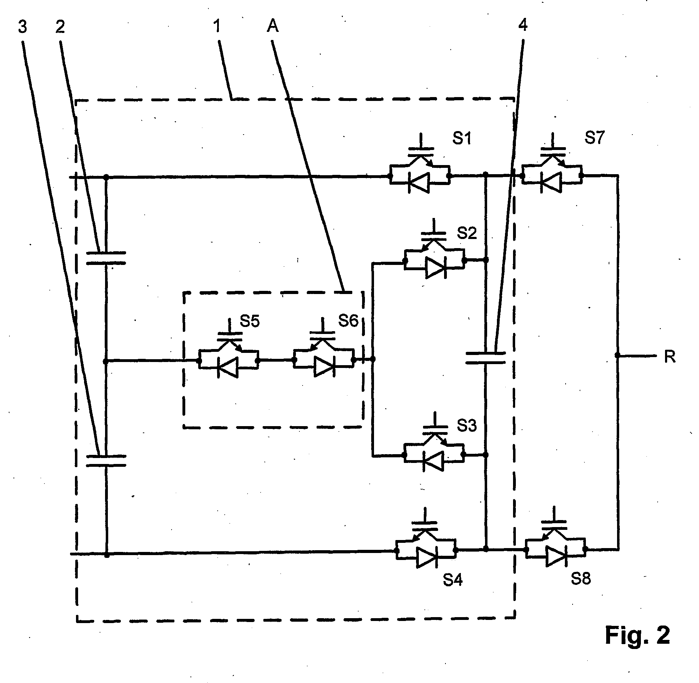

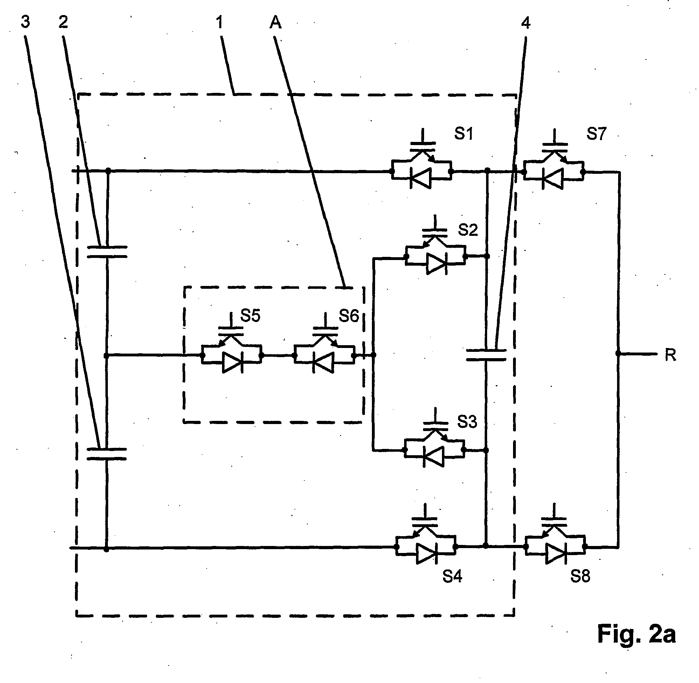

In Fig. 1 ist eine erste Ausführungsform einer erfindungsgemässen Schaltzelle 1 dargestellt. Darüber hinaus ist in Fig. 2 eine erste Ausführungsform einer erfindungsgemässen Umrichterschaltung zur Schaltung einer Vielzahl von Spannungsniveaus mit einer Schaltzelle nach Fig. 1 gezeigt. Gemäss Fig. 2 weist die Umrichterschaltung zur Schaltung einer Vielzahl von Spannungsniveaus einen ersten Leistungshalbleiterschalter S7 sowie einen zu dem ersten Leistungshalbleiterschalter S7 in Serie geschalteten zweiten Leistungshalbleiterschalter S8 auf. Gemäss Fig. 2 bildet dann der Verbindungspunkt des ersten Leistungshalbleiterschalter S7 mit dem zweiten Leistungshalbleiterschalter S8 einen Phasenanschluss, beispielhaft für die Phase R dargestellt. Gemäss Fig. 1 und Fig. 2 weist die Schaltzelle 1 einen ersten Energiespeicher 2 und einen zu dem ersten Energiespeicher 2 in Serie geschalteten zweiten Energiespeicher 3 auf. Ferner weist die Schaltzelle 1 einen ersten, zweiten, dritten und vierten Leistungshalbleiterschalter S1, S2, S3, S4, wobei der erste, zweite, dritte und vierte Leistungshalbleiterschalter S1, S2, S3, S4 jeweils ein ansteuerbarer bidirektionaler Leistungshalbleiterschalter mit gesteuerter unidirektionaler Stromführungsrichtung ist. Gemäss Fig. 1 ist jeder der jeweils als ein ansteuerbarer bidirektionaler Leistungshalbleiterschalter mit gesteuerter unidirektionaler Stromführungsrichtung ausgeführten ersten, zweiten, dritten und vierten Leistungshalbleiterschalter S1, S2, S3, S4 der Schaltzelle 1 beispielhaft durch einen Bipolartransistor mit isoliert angeordneter Gateelektrode (IGBT) und durch eine zu dem Bipolartransistor antiparallel geschaltete Diode gebildet. Es ist aber auch denkbar einen vorstehend genannten ansteuerbaren bidirektionalen Leistungshalbleiterschalter beispielsweise als Leistungs-MOSFET mit zusätzlich antiparallel geschalteter Diode auszuführen. Gemäss der Umrichterschaltung nach Fig. 2 ist der erste und zweite Leistungshalbleiterschalter S7, S8 der Umrichterschaltung jeweils ein ansteuerbarer bidirektionaler Leistungshalbleiterschalter mit gesteuerter unidirektionaler Stromführungsrichtung. Dabei ist jeder der jeweils als ein ansteuerbarer bidirektionaler Leistungshalbleiterschalter mit gesteuerter unidirektionaler Stromführungsrichtung ausgeführten ersten und zweiten Leistungshalbleiterschalter S7, S8 gemäss Fig. 2 beispielhaft durch einen Bipolartransistor mit isoliert angeordneter Gateelektrode (IGBT) und durch eine zu dem Bipolartransistor antiparallel geschaltete Diode gebildet. Es ist aber auch denkbar einen vorstehend genannten ansteuerbaren bidirektionalen Leistungshalbleiterschalter beispielsweise als Leistungs-MOSFET mit zusätzlich antiparallel geschalteter Diode auszuführen.

Der erste, zweite, dritte und vierte Leistungshalbleiterschalter S1, S2, S3, S4 der Schaltzelle 1 ist gemäss Fig. 1 und Fig. 2 in Serie geschaltet und der erste Leistungshalbleiterschalter S1 ist mit dem ersten Energiespeicher 2 und der vierte Leistungshalbleiterschalter S4 ist mit dem zweiten Energiespeicher 3 verbunden. Desweiteren ist ein dritter Energiespeicher 4 mit dem Verbindungspunkt des ersten Leistungshalbleiterschalters S1 mit dem zweiten Leistungshalbleiterschalter S2 und mit dem Verbindungspunkt des dritten Leistungshalbleiterschalters S3 mit dem vierten Leistungshalbleiterschalter S4 verbunden.

Erfindungsgemäss ist ein Schaltelement mit gesteuerter bidirektionaler Stromführungsrichtung A unmittelbar mit dem Verbindungspunkt des zweiten mit dem dritten Leistungshalbleiterschalter S2, S3 und unmittelbar mit dem Verbindungspunkt des ersten Energiespeichers 2 mit dem zweiten Energiespeicher 3 verbunden. Mit Vorteil lässt sich damit der Strom am Verbindungspunkt des ersten Energiespeichers 2 mit dem zweiten Energiespeicher 3 in bidirektionaler Richtung einstellen beziehungsweise regeln. Zudem lässt sich mittels der erfindungsgemässen Schaltzelle 1 eine Umrichterschaltung realisieren, welche in Verbindung mit Leistungshalbleiterschaltern der Umrichterschaltung beispielsweise fünf und sieben Spannungsniveaus schalten, ohne dass die Anzahl von anzusteuernden schaltenden Elementen der Umrichterschaltung insgesamt signifikant erhöht werden muss. Desweiteren bleibt die Anzahl Energiespeicher 2, 3, 4 mit Vorteil unverändert. Der Schaltungsaufwand einer solchen Umrichterschaltung kann mit der erfindungsgemässen Schaltzelle 1 demzufolge gering gehalten werden, wobei der Ansteueraufwand bezüglich der schaltenden Elemente zudem ebenfalls gering gehalten werden kann. Damit ist eine solche Umrichterschaltung mit der erfindungsgemässen Schaltzelle 1 insgesamt sehr einfach aufgebaut, wenig störanfällig und benötigt ein Minimum an Platz.

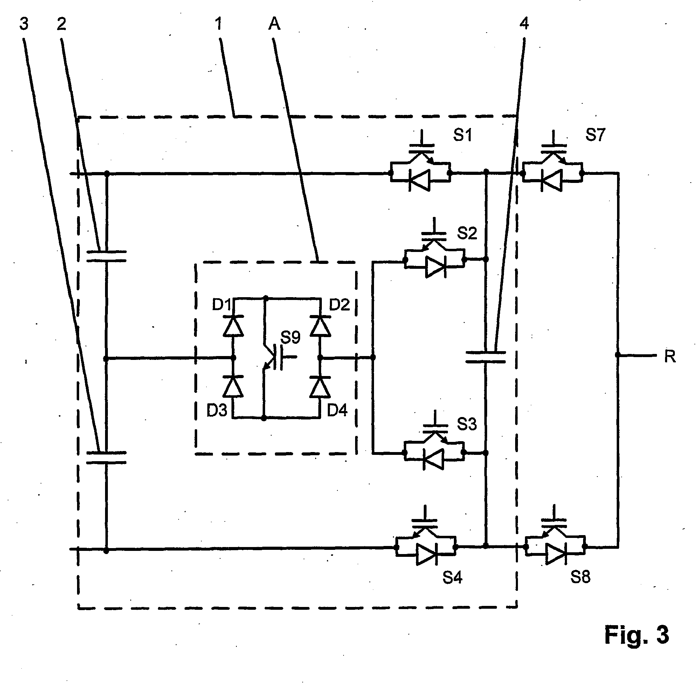

Wie bei der Ausführungsform der erfindungsgemässen Umrichterschaltung in Fig. 2 beispielhaft, aber auch in Fig. 3 bis Fig. 8a, welche Ausführungsformen nachfolgend noch detailliert beschrieben werden, gezeigt, ist die Schaltzelle 1 allgemein mit dem ersten Leistungshalbleiterschalter S7 der Umrichterschaltung und mit dem zweiten Leistungshalbleiterschalter S8 der Umrichterschaltung verbunden. Im Zusammenhang mit der erfindungsgemässen Schaltzelle 1, insbesondere gemäss Fig. 2 bis Fig. 8a, ist eine Umrichterschaltung realisiert, welche beispielsweise fünf und sieben Spannungsniveaus schalten kann, ohne dass die Anzahl von anzusteuernden schaltenden Elementen der Umrichterschaltung insgesamt bedeutsam erhöht werden muss. Werden mittels der Umrichterschaltung lediglich fünf Spannungsniveaus geschalten, erhöht sich vorteilhaft die Anzahl redundanter Schaltzustandskombinationen bzgl. eines Spannungsniveaus, d.h. mittels mehrerer Schaltzustandskombinationen der Leistungshalbleiterschalter S7, S8 der Umrichterschaltung, des ersten, zweiten, dritten und vierten Leistungshalbleiterschalters S1, S2, S3, S4 der Schaltzelle 1 und des Schaltelementes A kann beispielsweise dasselbe Spannungsniveau am Phasenanschluss eingestellt werden. Dadurch kann beispielsweise eine gleichmässigere Auslastung der anzusteuernden schaltenden Elemente der Umrichterschaltung erreicht werden und der dritte Energiespeicher 4 kann klein ausgelegt werden, da der dritte Energiespeicher 4 mittels der redundanten Schaltzustandskombinationen sowohl geladen wie auch entladen werden kann. Der Schaltungsaufwand für eine derartige Umrichterschaltung kann mit der erfindungsgemässen Schaltzelle 1 zudem vorteilhaft klein gehalten werden, wobei der Ansteueraufwand bezüglich der anzusteuernden schaltenden Elemente zudem ebenfalls gering gehalten werden kann. Damit ist eine solche erfindungsgemässe Umrichterschaltung mit der erfindungsgemässen Schaltzelle 1 insgesamt sehr einfach aufgebaut, robust und braucht nur wenig Platz.

Gemäss Fig. 2 bis Fig. 8a ist bei der erfindungsgemässen Umrichterschaltung allgemein der erste Leistungshalbleiterschalter S7 der Umrichterschaltung mit dem Verbindungspunkt des ersten Leistungshalbleiterschalters S1 der Schaltzelle 1 mit dem zweiten Leistungshalbleiterschalter S2 der Schaltzelle 1 verbunden und der zweite Leistungshalbleiterschalter S8 der Umrichterschaltung mit dem Verbindungspunkt des dritten Leistungshalbleiterschalters S3 der Schaltzelle 1 mit dem vierten Leistungshalbleiterschalter S4 der Schaltzelle 1 verbunden ist. Dadurch ist die erfindungsgemässe Umrichterschaltung denkbar einfach realisiert, damit wenig störanfällig und platzsparend.

Gemäss Fig. 1 und Fig. 2 weist das Schaltelement mit gesteuerter bidirektionaler Stromführungsrichtung A der Schaltzelle 1 zwei antiseriell geschaltete ansteuerbare bidirektionale Leistungshalbleiterschalter mit gesteuerter unidirektionaler Stromführungsrichtung S5, S6 aufweist. Die ansteuerbaren bidirektionalen Leistungshalbleiterschalter mit gesteuerter unidirektionaler Stromführungsrichtung S5, S6 können jeweils entsprechend den Leistungshalbleiterschaltern S1, S2, S3, S4, S7, S8, wie vorstehend erwähnt, ausgeführt sein. Bei der antiseriellen Schaltung der ansteuerbaren bidirektionalen Leistungshalbleiterschalter mit gesteuerter unidirektionaler Stromführungsrichtung S5, S6 bestehen nun zwei Möglichkeiten, nämlich entweder gemäss Fig. 1 bzw. Fig. 2 oder gemäss einer zweite Ausführungsform der erfindungsgemässen Umrichterschaltung zur Schaltung einer Vielzahl von Spannungsniveaus mit einer zweiten Ausführungsform einer erfindungsgemässen Schaltzelle 1 nach Fig. 2a.

In Fig. 3 ist eine dritte Ausführungsform der erfindungsgemässen Umrichterschaltung zur Schaltung einer Vielzahl von Spannungsniveaus mit einer dritten Ausführungsform der erfindungsgemässen Schaltzelle 1 gezeigt. Darin weist das Schaltelement 1 mit gesteuerter bidirektionaler Stromführungsrichtung A einen ansteuerbaren unidirektionalen Leistungshalbleiterschalter mit gesteuerter unidirektionaler Stromführungsrichtung S9 und vier unidirektionale Leistungshalbleiterschalter mit ungesteuerter unidirektionaler Stromführungsrichtung D1, D2, D3, D4 auf. Der ansteuerbare bidirektionalen Leistungshalbleiterschalter mit gesteuerter unidirektionaler Stromführungsrichtung S9 kann dabei entsprechend den Leistungshalbleiterschaltern S1, S2, S3, S4, S5, S6, S7, S8, wie vorstehend erwähnt, ausgeführt sein. Weiterhin sind die vier unidirektionale Leistungshalbleiterschalter mit ungesteuerter unidirektionaler Stromführungsrichtung D1, D2, D3, D4, beispielhaft jeweils als Dioden ausgeführt, welche entsprechend Fig. 3 mit dem ansteuerbaren bidirektionalen Leistungshalbleiterschalter mit gesteuerter unidirektionaler Stromführungsrichtung S9 des Schaltelementes A verschaltet sind. Das gemäss Fig. 3 ausgebildete Schaltelement A weist demnach nur einen einzigen ansteuerbaren bidirektionalen Leistungshalbleiterschalter mit gesteuerter unidirektionaler Stromführungsrichtung S9 auf, wodurch sich der Ansteueraufwand weiter reduziert und sich somit eine weitere Verbesserung der Störanfälligkeit einstellt. Darüber hinaus können die Schaltverluste reduziert werden.

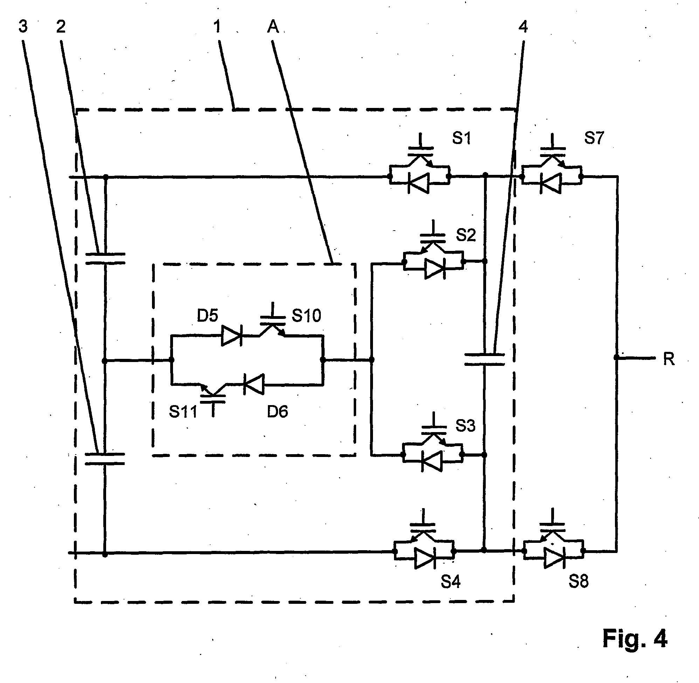

In Fig. 4 ist eine vierte Ausführungsform der erfindungsgemässen Umrichterschaltung zur Schaltung einer Vielzahl von Spannungsniveaus mit einer vierten Ausführungsform der erfindungsgemässen Schaltzelle 1 dargestellt. Darin weist das Schaltelement mit gesteuerter bidirektionaler Stromführungsrichtung A einen ersten und einen zweiten ansteuerbaren unidirektionaler Leistungshalbleiterschalter mit gesteuerter unidirektionaler Stromführungsrichtung S10, S11 und einen ersten und einen zweiten unidirektionalen Leistungshalbleiterschalter mit ungesteuerter unidirektionaler Stromführungsrichtung D5, D6 auf. Die ansteuerbaren bidirektionalen Leistungshalbleiterschalter mit gesteuerter unidirektionaler Stromführungsrichtung S10, S11 können dabei jeweils entsprechend den Leistungshalbleiterschaltern S1, S2, S3, S4, S5, S6, S7, S8, S9, wie vorstehend erwähnt, ausgeführt sein. Weiterhin sind die zwei unidirektionalen Leistungshalbleiterschalter mit ungesteuerter unidirektionaler Stromführungsrichtung D5, D6 beispielhaft jeweils als Dioden ausgeführt. Nach Fig. 4 ist der erste ansteuerbare unidirektionale Leistungshalbleiterschalter mit gesteuerter unidirektionaler Stromführungsrichtung S10 des Schaltelementes A und der erste unidirektionale Leistungshalbleiterschalter mit ungesteuerter unidirektionaler Stromführungsrichtung D5 des Schaltelementes A in Serie geschaltet. Weiterhin ist der zweite ansteuerbare unidirektionale Leistungshalbleiterschalter mit gesteuerter unidirektionaler Stromführungsrichtung S11 des Schaltelementes A und der zweite unidirektionale Leistungshalbleiterschalter mit ungesteuerter unidirektionaler Stromführungsrichtung D6 des Schaltelementes A in Serie geschaltet. Darüber hinaus ist die Serienschaltung des ersten ansteuerbaren unidirektionalen Leistungshalbleiterschalters mit gesteuerter unidirektionaler Stromführungsrichtung S10 des Schaltelementes A mit dem ersten unidirektionalen Leistungshalbleiterschalter mit ungesteuerter unidirektionaler Stromführungsrichtung D5 des Schaltelementes A antiparallel zur Serienschaltung des zweiten ansteuerbaren unidirektionalen Leistungshalbleiterschalters mit gesteuerter unidirektionaler Stromführungsrichtung S11 des Schaltelementes A mit dem zweiten unidirektionalen Leistungshalbleiterschalter mit ungesteuerter unidirektionaler Stromführungsrichtung D6 des Schaltelementes A geschaltet.

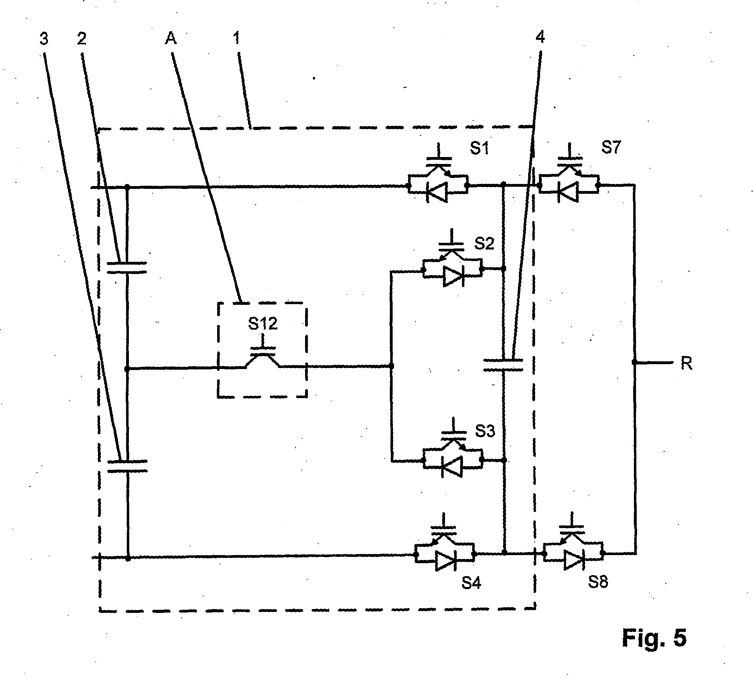

In einer fünften Ausführungsform der erfindungsgemässen Umrichterschaltung zur Schaltung einer Vielzahl von Spannungsniveaus gemäss Fig. 5 mit einer fünften Ausführungsform der erfindungsgemässen Schaltzelle 1 weist das Schaltelement mit gesteuerter bidirektionaler Stromführungsrichtung A einen ansteuerbaren Leistungshalbleiterschalter mit gesteuerter bidirektionaler Stromführungsrichtung S12 auf. Das gemäss Fig. 5 ausgebildete Schaltelement A weist demnach nur einen einzigen ansteuerbaren bidirektionalen Leistungshalbleiterschalter S12 auf, wodurch der Ansteueraufwand weiter reduziert werden kann und sich somit eine weitere Verbesserung der Störanfälligkeit einstellt. Darüber hinaus können die Schaltverluste reduziert werden. Ausserdem reduzieren sich vorteilhaft die Durchlassverluste, da im Schaltelement mit gesteuerter bidirektionaler Stromführungsrichtung A nur ein einziger ansteuerbarer bidirektionaler Leistungshalbleiterschalter S12 vorgesehen ist.

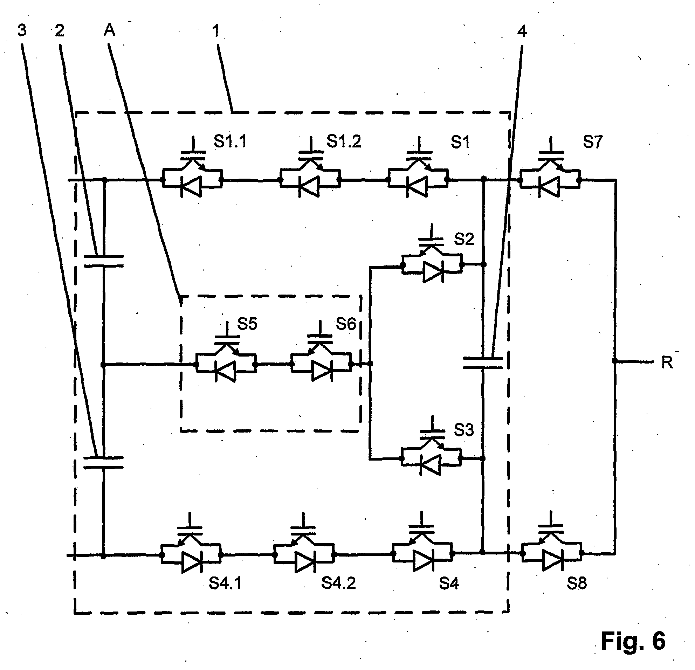

In Fig. 6 ist eine sechste Ausführungsform der erfindungsgemässen Umrichterschaltung zur Schaltung einer Vielzahl von Spannurigsniveaus mit einer sechsten Ausführungsform der erfindungsgemässen Schaltzelle 1 gezeigt. In Fig. 6 sind bei der Schaltzelle 1 zwischen die Verbindung des ersten Leistungshalbleiterschalters S1 mit dem ersten Energiespeicher 2 zwei weitere Leistungshalbleiterschalter S1.1, S1.2 seriell eingeschaltet, wobei zwischen die Verbindung des vierten Leistungshalbleiterschalters S4 mit dem zweiten Energiespeicher 2 ebenfalls zwei weitere Leistungshalbleiterschalter S4.1, S4.2 seriell eingeschaltet sind. Allgemein ist bei der Schaltzelle 1 zwischen die Verbindung des ersten Leistungshalbleiterschalters S1 mit dem ersten Energiespeicher 2 mindestens ein weiterer Leistungshalbleiterschalter S1.1, S1.2 seriell eingeschaltet, wobei zudem zwischen die Verbindung des vierten Leistungshalbleiterschalters S4 mit dem zweiten Energiespeicher 2 mindestens ein weiterer Leistungshalbleiterschalter S4.1, S4.2 seriell eingeschaltet ist. Jeder weitere Leistungshalbleiterschalter S1.1, S1.2, S4.1, S4.2 ist jeweils ein ansteuerbarer bidirektionaler Leistungshalbleiterschalter mit gesteuerter unidirektionaler Stromführungsrichtung. Die weiteren Leistungshalbleiterschalter S1.1, S,1.2, S4.1, S4.2 können dabei jeweils entsprechend den Leistungshalbleiterschaltern S1, S2, S3, S4, S5, S6, S7, S8, S9, S10, S11, wie vorstehend erwähnt, ausgeführt sein. Das Schaltelement A ist gemäss Fig. 1 bzw. Fig. 2 ausgebildet, wobei es selbstverständlich auch denkbar ist, das Schaltelement gemäss Fig. 2a bis Fig. 5 auszubilden. Werden mittels der Umrichterschaltung lediglich fünf Spannungsniveaus geschalten, können sämtliche Leistungshalbleiterschalter S1, S1.1, S1.2, S2, S3, S4, S4.1, S4.2, S5, S6, S7, S8 mit Vorteil für dieselbe Blockierspannung ausgelegt werden. Im Falle mindestens zwei weiterer zwischen die Verbindung des ersten Leistungshalbleiterschalters S1 mit dem ersten Energiespeicher 2 seriell eingeschalteter Leistungshalbleiterschalter S1.1, S1.2 und mindestens zwei weiterer zwischen die Verbindung des vierten Leistungshalbleiterschalters S4 mit dem zweiten Energiespeicher 2 seriell eingeschalteter Leistungshalbleiterschalter S4.1, S4.2, wie in Fig. 6 gezeigt; können die seriell geschalteten Leistungshalbleiterschalter S1.1, S1.2, S4.1, S4.2 nun vorteilhafterweise versetzt getaktet werden, um die Schaltverluste besser zu verteilen. Im Falle nur eines einzigen weiteren zwischen die Verbindung des ersten Leistungshalbleiterschalters S1 mit dem ersten Energiespeicher 2 seriell eingeschalteten Leistungshalbleiterschalters S1.1 und nur eines einzigen weiteren zwischen die Verbindung des vierten Leistungshalbleiterschalters S4 mit dem zweiten Energiespeicher 2 seriell eingeschalteten Leistungshalbleiterschalters S4.1 kann der seriell geschaltete Leistungshalbleiterschalter S1.1, S4.1, vorteilhafterweise mit der doppelten Blockierspannung ausgelegt werden, wobei dann diese weiteren Leistungshalbleiterschalter S1.1, S4.1 mit einer gegenüber dem ersten Leistungshalbleiterschalters S1 der Schaltzelle 1 beziehungsweise gegenüber dem vierten Leistungshalbleiterschalter S4 der Schaltzelle 1 tieferen Schaltfrequenz betrieben werden können, so dass dann insgesamt die Durchlassverluste der weiteren Leistungshalbleiterschalter S1.1, S4.1 gering gehalten werden können. Beispielsweise könnte dabei ein solcher weiteren Leistungshalbleiterschalter S1.1, S4.1 mit der doppelten Blockierspannung als ein integrierter über die Ansteuerelektrode kommutierter Thyristor (IGCT - Integrated Gate-Commutated Thyristor) oder ein Gate Turn-Off Thyristor (GTO) mit jeweils antiparallel geschalteter Diode sein, wobei dann der erste Leistungshalbleiterschalters S1 und der vierte Leistungshalbleiterschalter S4 beispielsweise ein Bipolartransistor mit isoliert angeordneter Gateelektrode (IGBT) oder ein Leistungs-MOSFET mit jeweils antiparallel geschaltete Diode sein könnte. Mittels der Ausführungsformen der erfindungsgemässen Schaltzelle 1 nach Fig. 6 lässt sich mit Vorteil beispielsweise sehr leicht ein kaskadiertes Umrichtersystem aufbauen.

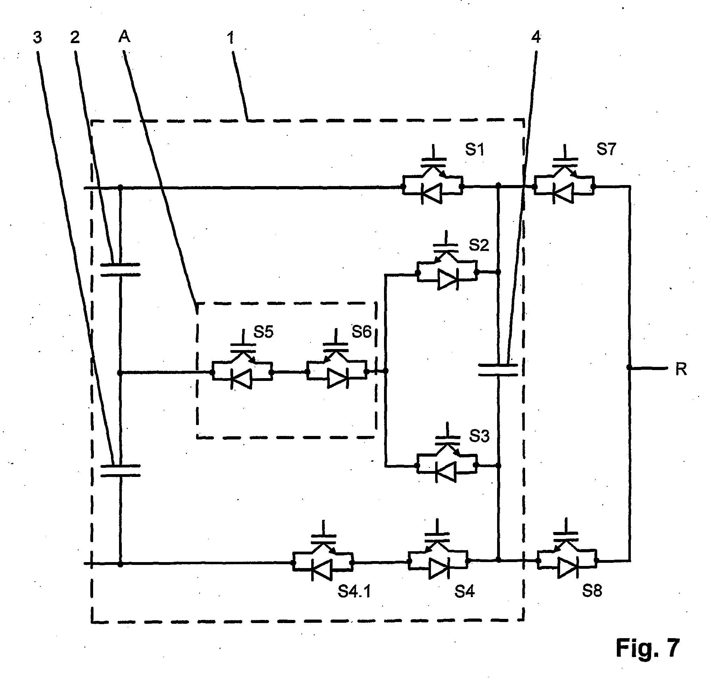

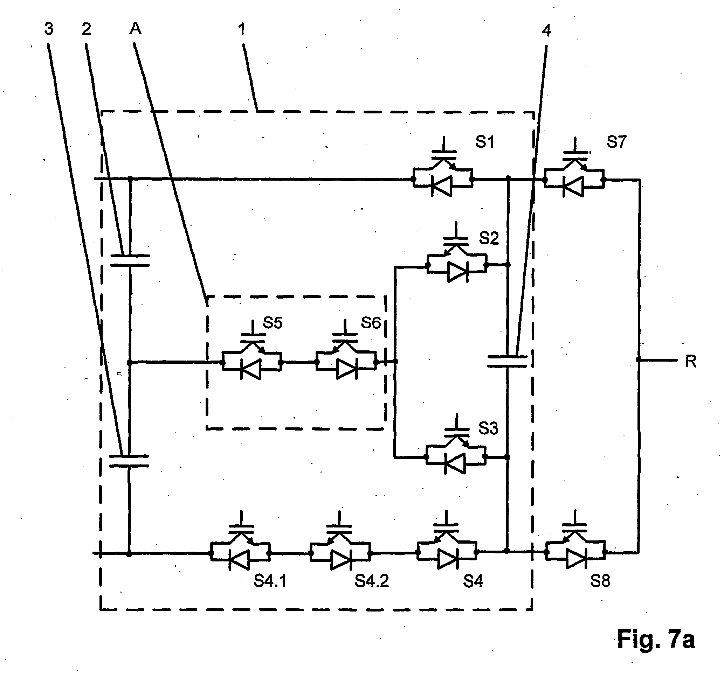

Fig. 7 zeigt eine siebte Ausführungsform der erfindungsgemässen Umrichterschaltung zur Schaltung einer Vielzahl von Spannungsniveaus mit einer siebten Ausführungsform der erfindungsgemässen Schaltzelle 1. Ferner ist in Fig. 7a eine achte Ausführungsform einer erfindungsgemässen Umrichterschaltung zur Schaltung einer Vielzahl von Spannungsniveaus mit einer achten Ausführungsform der erfindungsgemässen Schaltzelle 1 gezeigt. Allgemein ist bei der Schaltzelle 1 nach Fig. 7 und Fig. 7a zwischen die Verbindung des vierten Leistungshalbleiterschalters S4 mit dem zweiten Energiespeicher 3 mindestens ein weiterer Leistungshalbleiterschalter S4.1, S4.2 eingeschaltet. Jeder weitere Leistungshalbleiterschalter S4.1, S4.2 ist jeweils ein ansteuerbarer bidirektionaler Leistungshalbleiterschalter mit gesteuerter unidirektionaler Stromführungsrichtung. Die weiteren Leistungshalbleiterschalter S4.1, S4.2 können dabei jeweils entsprechend den Leistungshalbleiterschaltern S1, S2, S3, S4, S5, S6, S7, S8, S9, S10, S11, wie vorstehend erwähnt, ausgeführt sein. Das Schaltelement A ist nach Fig. 7 und Fig. 7a entsprechend Fig. 1 bzw. Fig. 2 ausgebildet, wobei es selbstverständlich auch denkbar ist, das Schaltelement gemäss Fig. 2a bis Fig. 5 auszubilden. Im Falle eines einzigen weiteren Leistungshalbleiterschalters S4.1, wie in Fig. 7 gezeigt, ist der weitere Leistungshalbleiterschalter S4.1 antiseriell bezüglich des vierten Leistungshalbleiterschalters S4 geschaltet. Hingegen ist im Falle mehrerer weiterer Leistungshalbleiterschalter S4.1, S4.2, wie in Fig. 7a dargestellt, mindestens ein weiterer Leistungshalbleiterschalter S4.1 antiseriell bezüglich des vierten Leistungshalbleiterschalters S4 geschaltet ist und mindestens ein weiterer Leistungshalbleiterschalter S4.2 seriell bezüglich des vierten Leistungshalbleiterschalters S4 geschaltet. Mittels der Ausführungsformen der erfindungsgemässen Schaltzelle 1 nach Fig. 7 beziehungsweise nach Fig. 7a lässt sich ebenfalls mit Vorteil beispielsweise sehr leicht ein kaskadiertes Umrichtersystem aufbauen.

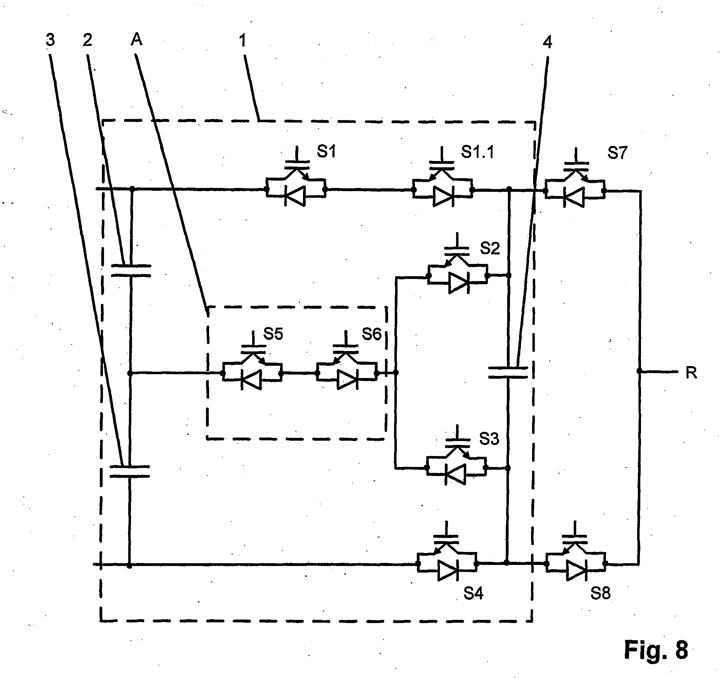

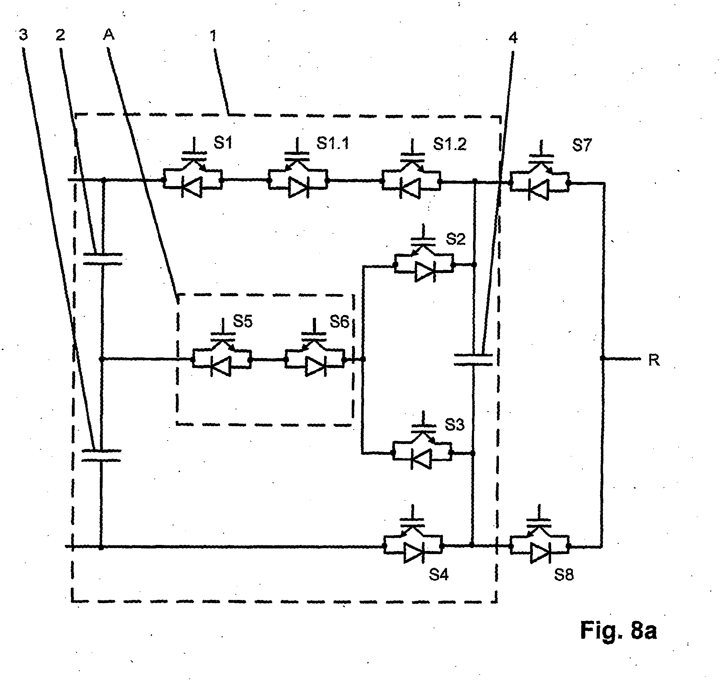

Fig. 8 zeigt eine neunte Ausführungsform der erfindungsgemässen Umrichterschaltung zur Schaltung einer Vielzahl von Spannungsniveaus mit einer neunten Ausführungsform der erfindungsgemässen Schaltzelle 1. Zudem ist in Fig. 8a eine zehnte Ausführungsform der erfindungsgemässen Umrichterschaltung zur Schaltung einer Vielzahl von Spannungsniveaus mit einer zehnten Ausführungsform der erfindungsgemässen Schaltzelle 1 dargestellt. Allgemein ist bei der Schaltzelle 1 gemäss Fig. 8 und Fig. 8a zwischen die Verbindung des ersten Leistungshalbleiterschalters S1 mit dem zweiten Leistungshalbleiterschalter S2 mindestens ein weiterer Leistungshalbleiterschalter S1.1, S1.2 eingeschaltet. Jeder weitere Leistungshalbleiterschalter S1.1, S1.2 ist jeweils ein ansteuerbarer bidirektionaler Leistungshalbleiterschalter mit gesteuerter unidirektionaler Stromführungsrichtung. Die weiteren Leistungshalbleiterschalter S1.1, S1.2 können dabei jeweils entsprechend den Leistungshalbleiterschaltern S1, S2, S3, S4, S5, S6, S7, S8, S9, S10, S11, wie vorstehend erwähnt, ausgeführt sein. Das Schaltelement A ist nach Fig. 8 und Fig. 8a entsprechend Fig. 1 bzw. Fig. 2 ausgebildet, wobei es selbstverständlich auch denkbar ist, das Schaltelement gemäss Fig. 2a bis Fig. 5 auszubilden. Im Falle eines einzigen weiteren Leistungshalbleiterschalters S1.1, wie in Fig. 8 gezeigt, ist der weitere Leistungshalbleiterschalter S.1.1 antiseriell bezüglich des ersten Leistungshalbleiterschalters S1 geschaltet. Dagegen ist im Falle mehrerer weiterer Leistungshalbleiterschalter S1.1, S1.2, wie in Fig. 8a dargestellt, mindestens ein weiterer Leistungshalbleiterschalter S1.1 antiseriell bezüglich des ersten Leistungshalbleiterschalters S1 geschaltet und mindestens ein weiterer Leistungshalbleiterschalter S1.2 seriell bezüglich des ersten Leistungshalbleiterschalters S1 geschaltet. Auch mittels der Ausführungsformen der erfindungsgemässen Schaltzelle 1 nach Fig. 8 beziehungsweise nach Fig. 8a lässt sich mit Vorteil beispielsweise sehr leicht ein kaskadiertes Umrichtersystem aufbauen.

Selbstverständlich steht es dem Fachmann frei, sämtliche Ausführungsformen der erfindungsgemässen Schaltzelle 1 nach Fig. 2 bis Fig. 8a beziehungsweise Umrichterschaltung gemäss Fig. 2 bis Fig. 8a auch untereinander, sowohl einfach als auch mehrfach, zu einem Umrichtersystem zu kombinieren.

### Bezugszeichenliste

- 1: Schaltzelle
- 2: erste Energiespeicher
- 3: zweiter Energiespeicher
- 4: dritter Energiespeicher
- A: Schaltelement der Schaltzelle
- S1: erste Leistungshalbleiterschalter der Schaltzelle
- S2: zweiter Leistungshalbleiterschalter der Schaltzelle
- S3: dritter Leistungshalbleiterschalter der Schaltzelle
- S4: vierter Leistungshalbleiterschalter der Schaltzelle
- S5: ansteuerbarer Leistungshalbleiterschalter des Schaltelementes der Schaltzelle
- S6: ansteuerbarer Leistungshalbleiterschalter des Schaltelementes der Schaltzelle
- S7: erste Leistungshalbleiterschalter einer Umrichterschaltung
- S8: zweiter Leistungshalbleiterschalter der Umrichterschaltung
- S9: ansteuerbarer Leistungshalbleiterschalter des Schaltelementes der Schaltzelle
- S10: ansteuerbarer Leistungshalbleiterschalter des Schaltelementes der Schaltzelle
- S11: ansteuerbarer Leistungshalbleiterschalter des Schaltelementes der Schaltzelle
- S12: ansteuerbarer Leistungshalbleiterschalter des Schaltelementes der Schaltzelle
- D1, D2, D3, D4, D5, D6: Leistungshalbleiterschalter des Schaltelementes der Schaltzelle

## Patentansprüche

1. Schaltzelle (1) mit einem ersten und einem zu dem ersten Energiespeicher (2) in Serie geschalteten zweiten Energiespeicher (3),
mit einem ersten, zweiten, dritten und vierten Leistungshalbleiterschalter (S1, S2, S3, S4), wobei der erste, zweite, dritte und vierte Leistungshalbleiterschalter (S1, S2, S3, S4) jeweils ein ansteuerbarer bidirektionaler Leistungshalbleiterschalter mit gesteuerter unidirektionaler Stromführungsrichtung ist und der erste, zweite, dritte und vierte Leistungshalbleiterschalter (S1, S2, S3, S4) in Serie geschaltet ist und der erste Leistungshalbleiterschalter (S1) mit dem ersten Energiespeicher (2) und der vierte Leistungshalbleiterschalter (S4) mit dem zweiten Energiespeicher (3) verbunden ist,
mit einem dritten Energiespeicher (4), welcher mit dem Verbindungspunkt des ersten Leistungshalbleiterschalters (S1) mit dem zweiten Leistungshalbleiterschalter (S2) und mit dem Verbindungspunkt des dritten Leistungshalbleiterschalters (S3) mit dem vierten Leistungshalbleiterschalter (S4) verbunden ist,
**dadurch gekennzeichnet,**
**dass** ein Schaltelement mit gesteuerter bidirektionaler Stromführungsrichtung (A) unmittelbar mit dem Verbindungspunkt des zweiten mit dem dritten Leistungshalbleiterschalter (S2, S3) und unmittelbar mit dem Verbindungspunkt des ersten Energiespeichers (2) mit dem zweiten Energiespeicher (3) verbunden ist.

2. Schaltzelle (1) nach Anspruch 1, **dadurch gekennzeichnet, dass** das Schaltelement mit gesteuerter bidirektionaler Stromführungsrichtung (A) zwei antiseriell geschaltete ansteuerbare bidirektionale Leistungshalbleiterschalter mit gesteuerter unidirektionaler Stromführungsrichtung (S5, S6) aufweist.

3. Schaltzelle (1) nach Anspruch 1, **dadurch gekennzeichnet, dass** das Schaltelement mit gesteuerter bidirektionaler Stromführungsrichtung (A) einen ansteuerbaren unidirektionalen Leisturigshalbleiterschalter mit gesteuerter unidirektionaler Stromführungsrichtung (S9) und vier unidirektionale Leistungshalbleiterschalter mit ungesteuerter unidirektionaler Stromführungsrichtung (D1, D2, D3, D4) aufweist.

4. Schaltzelle (1) nach Anspruch 1, **dadurch gekennzeichnet, dass** das Schaltelement mit gesteuerter bidirektionaler Stromführungsrichtung (A) einen ersten und einen zweiten ansteuerbaren unidirektionalen Leistungshalbleiterschalter mit gesteuerter unidirektionaler Stromführungsrichtung (S10, S11) und einen ersten und einen zweiten unidirektionalen Leistungshalbleiterschalter mit ungesteuerter unidirektionaler Stromführungsrichtung (D5, D6) aufweist.

5. Schaltzelle (1) nach Anspruch 4, **dadurch gekennzeichnet, dass** der erste ansteuerbare unidirektionale Leistungshalbleiterschalter mit gesteuerter unidirektionaler Stromführungsrichtung (S10) des Schaltelementes (A) und der erste unidirektionale Leistungshalbleiterschalter mit ungesteuerter unidirektionaler Stromführungsrichtung (D5) des Schaltelementes (A) in Serie geschaltet ist,
dass der zweite ansteuerbare unidirektionale Leistungshalbleiterschalter mit gesteuerter unidirektionaler Stromführungsrichtung (S11) des Schaltelementes (A) und der zweite unidirektionale Leistungshalbleiterschalter mit ungesteuerter unidirektionaler Stromführungsrichtung (D6) des Schaltelementes (A) in Serie geschaltet ist, und
dass die Serienschaltung des ersten ansteuerbaren unidirektionalen Leistungshalbleiterschalters mit gesteuerter unidirektionaler Stromführungsrichtung (S10) des Schaltelementes (A) mit dem ersten unidirektionalen Leistungshalbleiterschalter mit ungesteuerter unidirektionaler Stromführungsrichtung (D5) des Schaltelementes (A) antiparallel zur Serienschaltung des zweiten ansteuerbaren unidirektionalen Leistungshalbleiterschalters mit gesteuerter unidirektionaler Stromführungsrichtung (S11) des Schaltelementes (A) mit dem zweiten unidirektionalen Leistungshalbleiterschalter mit ungesteuerter unidirektionaler Stromführungsrichtung (D6) des Schaltelementes (A) geschaltet ist.

6. Schaltzelle (1) nach Anspruch 1, **dadurch gekennzeichnet, dass** das Schaltelement mit gesteuerter bidirektionaler Stromführungsrichtung (A) einen ansteuerbaren Leistungshalbleiterschalter mit gesteuerter bidirektionaler Stromführungsrichtung (S12) aufweist.

7. Schaltzelle (1) nach einem der Ansprüche 1 bis 6, **dadurch gekennzeichnet, dass** zwischen die Verbindung des ersten Leistungshalbleiterschalters (S1) mit dem ersten Energiespeicher (2) mindestens ein weiterer Leistungshalbleiterschalter (S1.1, S1.2) seriell eingeschaltet ist, und
dass zwischen die Verbindung des vierten Leistungshalbleiterschalters (S4) mit dem zweiten Energiespeicher (2) mindestens ein weiterer Leistungshalbleiterschalter (S4.1, S4.2) seriell eingeschaltet ist, wobei jeder weitere Leistungshalbleiterschalter (S1.1, S1.2, S4.1, S4.2) jeweils ein ansteuerbarer bidirektionaler Leistungshalbleiterschalter mit gesteuerter unidirektionaler Stromführungsrichtung ist.

8. Schaltzelle (1) nach einem der Ansprüche 1 bis 6, **dadurch gekennzeichnet, dass** zwischen die Verbindung des vierten Leistungshalbleiterschalters (S4) mit dem zweiten Energiespeicher (3) mindestens ein weiterer Leistungshalbleiterschalter (S4.1, S4.2) eingeschaltet ist, wobei jeder weitere Leistungshalbleiterschalter (S4.1, S4.2) jeweils ein ansteuerbarer bidirektionaler Leistungshalbleiterschalter mit gesteuerter unidirektionaler Stromführungsrichtung ist.

9. Schaltzelle (1) nach Anspruch 8, **dadurch gekennzeichnet, dass** im Falle eines einzigen weiteren Leistungshalbleiterschalters (S4.1) der weitere Leistungshalbleiterschalter S4.1) antiseriell bezüglich des vierten Leistungshalbleiterschalters (S4) geschaltet ist.

10. Schaltzelle (1) nach Anspruch 8, **dadurch gekennzeichnet, dass** im Falle mehrerer weiterer Leistungshalbleiterschalter (S4.1, S4.2) mindestens ein weiterer Leistungshalbleiterschalter (S4.1) antiseriell bezüglich des vierten Leistungshalbleiterschalters (S4) geschaltet ist und mindestens ein weiterer Leistungshalbleiterschalter (S4.2) seriell bezüglich des vierten Leistungshalbleiterschalters (S4) geschaltet ist.

11. Schaltzelle (1) nach einem der Ansprüche 1 bis 6, **dadurch gekennzeichnet; dass** zwischen die Verbindung des ersten Leistungshalbleiterschalters (S1) mit dem zweiten Leistungshalbleiterschalter (S2) mindestens ein weiterer Leistungshalbleiterschalter (S1.1, S1.2) eingeschaltet ist, wobei jeder weitere Leisflungshalbleiterschalter (S1.1, S1.2) jeweils ein ansteuerbare bidirektionaler Leistungshalbleiterschalter mit gesteuerter unidirektionaler Stromführungsrichtung ist.

12. Schaltzelle (1) nach Anspruch 11, **dadurch gekennzeichnet, dass** im Falle eines einzigen weiteren Leistungshalbleiterschalters (S1.1) der weitere Leistungshalbleiterschalter (S.1.1) antiseriell bezüglich des ersten Leistungshalbleiterschalters (S1) geschaltet ist.

13. Schaltzelle (1) nach Anspruch 11, **dadurch gekennzeichnet, dass** im Falle mehrerer weiterer Leistungshalbleiterschalter (S1.1, S1.2) mindestens ein weiterer Leistungshalbleiterschalter (S1.1) antiseriell bezüglich des ersten Leistungshalbleiterschalters (S1) geschaltet ist und mindestens ein weiterer Leistungshalbleiterschalter (S1.2) seriell bezüglich des ersten Leistungshalbleiterschalters (S1) geschaltet ist.

14. Umrichterschaltung zur Schaltung einer Vielzahl von Spannungsniveaus mit einem ersten Leistungshalbleiterschalter (S7) und einem zu dem ersten Leistungshalbleiterschalter (S7) in Serie geschalteten zweiten Leistungshalbleiterschalter (S8), mit eines Schaltzelle nach einem des Ansprüche 1 bis 13, **dadurch gekennzeichnet,**
**dass** die Schaltzelle (1) mit dem ersten Leistungshalbleiterschalter (S7) der Umrichterschaltung und mit dem zweiten Leistungshalbleiterschalter (S8) der Umrichterschaltung verbunden ist.

15. Umrichterschaltung nach Anspruch 14, **dadurch gekennzeichnet, dass** der erste Leistungshalbleiterschalter (S7) der Umrichterschaltung mit dem Verbindungspunkt des ersten Leistungshalbleiterschalters (S1) der Schaltzelle (1) mit dem zweiten Leistungshalbleiterschalter (S2) der Schaltzelle (1) verbunden ist, und
dass der zweite Leistungshalbleiterschalter (S8) der Umrichterschaltung mit dem Verbindungspunkt des dritten Leistungshalbleiterschalters (S3) der Schaltzelle (1) mit dem vierten Leistungshalbleiterschalter (S4) der Schaltzelle (1) verbunden ist.

16. Umrichterschaltung nach Anspruch 14 oder 15, **dadurch gekennzeichnet, dass** der erste und zweite Leistungshalbleiterschalter (S7, S8) der Umrichterschaltung jeweils ein ansteuerbarer bidirektionaler Leistungshalbleiterschalter mit gesteuerter unidirektionaler Stromführungsrichtung ist.

## Claims

1. Switchgear cell (1) having a first energy store (2) and a second energy store (3) connected in series therewith,
having a first, second, third and fourth power semiconductor switch (S1, S2, S3, S4), wherein the first, second, third and fourth power semiconductor switch (S1, S2, S3, S4) are in each case a drivable bidirectional power semiconductor switch with a controlled unidirectional current-carrying direction and the first, second, third and fourth power semiconductor switch (S1, S2, S3, S4) are connected in series and the first power semiconductor switch (S1) is connected to the first energy store (2) and the fourth power semiconductor switch (S4) is connected to the second energy store (3),
having a third energy store (4), which is connected to the junction point between the first power semiconductor switch (S1) and the second power semiconductor switch (S2) and to the junction point between the third power semiconductor switch (S3) and the fourth power semiconductor switch (S4),
**characterized**
**in that** a switching element with a controlled bidirectional current-carrying direction (A) is connected directly to the junction point between the second and the third power semiconductor switch (S2, S3) and directly to the junction point between the first energy store (2) and the second energy store (3).

2. Switchgear cell (1) according to Claim 1,
**characterized in that** the switching element with a controlled bidirectional current-carrying direction (A) has two antiseries-connected drivable bidirectional power semiconductor switches with a controlled unidirectional current-carrying direction (S5, S6).

3. Switchgear cell (1) according to Claim 1,
**characterized in that** the switching element with a controlled bidirectional current-carrying direction (A) has one drivable unidirectional power semiconductor switch with a controlled unidirectional current-carrying direction (S9) and four unidirectional power semiconductor switches with an uncontrolled unidirectional current-carrying direction (D1, D2, D3, D4).

4. Switchgear cell (1) according to Claim 1,
**characterized in that** the switching element with a controlled bidirectional current-carrying direction (A) has a first and a second drivable unidirectional power semiconductor switch with a controlled unidirectional current-carrying direction (S10, S11) and a first and a second unidirectional power semiconductor switch with an uncontrolled unidirectional current-carrying direction (D5, D6).

5. Switchgear cell (1) according to Claim 4,
**characterized in that** the first drivable unidirectional power semiconductor switch with a controlled unidirectional current-carrying direction (S10) of the switching element (A) and the first unidirectional power semiconductor switch with an uncontrolled unidirectional current-carrying direction (D5) of the switching element (A) are connected in series,
**in that** the second drivable unidirectional power semiconductor switch with a controlled unidirectional current-carrying direction (S11) of the switching element (A) and the second unidirectional power semiconductor switch with an uncontrolled unidirectional current-carrying direction (D6) of the switching element (A) are connected in series, and
**in that** the series circuit formed by the first drivable unidirectional power semiconductor switch with a controlled unidirectional current-carrying direction (S10) of the switching element (A) and the first unidirectional power semiconductor switch with an uncontrolled unidirectional current-carrying direction (D5) of the switching element (A) is connected in antiparallel with the series circuit formed by the second drivable unidirectional power semiconductor switch with a controlled unidirectional current-carrying direction (S11) of the switching element (A) and the second unidirectional power semiconductor switch with an uncontrolled unidirectional current-carrying direction (D6) of the switching element (A).

6. Switchgear cell (1) according to Claim 1, **characterized in that** the switching element with a controlled bidirectional current-carrying direction (A) has a drivable power semiconductor switch with a controlled bidirectional current-carrying direction (S12).

7. Switchgear cell (1) according to any of Claims 1 to 6, **characterized in that** at least one further power semiconductor switch (S1.1, S1.2) is connected in in series between the connection of the first power semiconductor switch (S1) to the first energy store (2), and
**in that** at least one further power semiconductor switch (S4.1, S4.2) is connected in in series between the connection of the fourth power semiconductor switch (S4) to the second energy store (2), wherein each further power semiconductor switch (S1.1, S1.2, S4.1, S4.2) is in each case a drivable bidirectional power semiconductor switch with a controlled unidirectional current-carrying direction.

8. Switchgear cell (1) according to any of Claims 1 to 6, **characterized in that** at least one further power semiconductor switch (S4.1, S4.2) is connected in between the connection of the fourth power semiconductor switch (S4) to the second energy store (3) wherein each further power semiconductor switch (S4.1, S4.2) is in each case a drivable bidirectional power semiconductor switch with a controlled unidirectional current-carrying direction.

9. Switchgear cell (1) according to Claim 8, **characterized in that**, in the case of a single further power semiconductor switch (S4.1), the further power semiconductor switch (S4.1) is connected in antiseries with respect to the fourth power semiconductor switch (S4).

10. Switchgear cell (1) according to Claim 8, **characterized in that**, in the case of a plurality of further power semiconductor switches (S4.1, S4.2), at least one further power semiconductor switch (S4.1) is connected in antiseries with respect to the fourth power semiconductor switch (S4) and at least one further power semiconductor switch (S4.2) is connected in series with respect to the fourth power semiconductor switch (S4).

11. Switchgear cell (1) according to any of Claims 1 to 6, **characterized in that** at least one further power semiconductor switch (S1.1, S1.2) is connected in between the connection of the first power semiconductor switch (S1) to the second power semiconductor switch (S2), wherein each further power semiconductor switch (S1.1, S1.2) is in each case a drivable bidirectional power semiconductor switch with a controlled unidirectional current-carrying direction.

12. Switchgear cell (1) according to Claim 11, **characterized in that**, in the case of a single further power semiconductor switch (S1.1), the further power semiconductor switch (S1.1) is connected in antiseries with respect to the first power semiconductor switch (S1).

13. Switchgear cell (1) according to Claim 11, **characterized in that**, in the case of a plurality of further power semiconductor switches (S1.1, S1.2), at least one further power semiconductor switch (S1.1) is connected in antiseries with respect to the first power semiconductor switch (S1) and at least one further power semiconductor switch (S1.2) is connected in series with respect to the first power semiconductor switch (S2).

14. Converter circuit for switching a large number of voltage levels having a first power semiconductor switch (S7) and a second power semiconductor switch (S8) connected in series with the first power semiconductor switch (S7), having a switchgear cell according to any of Claims 1 to 13, **characterized**
**in that** the switchgear cell (1) is connected to the first power semiconductor switch (S7) of the converter circuit and to the second power semiconductor switch (S8) of the converter circuit.

15. Converter circuit according to Claim 14, **characterized in that** the first power semiconductor switch (S7) of the converter circuit is connected to the junction point between the first power semiconductor switch (S1) of the switchgear cell (1) and the second power semiconductor switch (S2) of the switchgear cell (1), and
**in that** the second power semiconductor switch (S8) of the converter circuit is connected to the junction point between the third power semiconductor switch (S3) of the switchgear cell (1) and the fourth power semiconductor switch (S4) of the switchgear cell (1).

16. Converter circuit according to Claim 14 or 15, **characterized in that** the first and second power semiconductor switch (S7, S8) of the converter circuit are in each case a drivable bidirectional power semiconductor switch with a controlled unidirectional current-carrying direction.

## Revendications

1. Cellule de commutation (1) comprenant un premier accumulateur d'énergie (2) et un deuxième accumulateur d'énergie (3) branché en série avec le premier,
comprenant un premier, un deuxième, un troisième et un quatrième commutateur semiconducteur de puissance (S1, S2, S3, S4), le premier, deuxième, troisième et quatrième commutateur semiconducteur de puissance (S1, S2, S3, S4) étant respectivement un commutateur semiconducteur de puissance bidirectionnel commandable avec sens de circulation du courant unidirectionnel commandé et le premier, deuxième, troisième et quatrième commutateur semiconducteur de puissance (S1, S2, S3, S4) étant branchés en série et le premier commutateur semiconducteur de puissance (S1) étant relié avec le premier accumulateur d'énergie (2) et le quatrième commutateur semiconducteur de puissance (S4) étant relié avec le deuxième accumulateur d'énergie (3),
comprenant un troisième accumulateur d'énergie (4) qui est relié avec le point de liaison entre le premier commutateur semiconducteur de puissance (S1) et le deuxième commutateur semiconducteur de puissance (S2) et avec le point de liaison entre le troisième commutateur semiconducteur de puissance (S3) et le quatrième commutateur semiconducteur de puissance (S4),
**caractérisée en ce**
**qu'**un élément de commutation avec sens de circulation du courant bidirectionnel commandé (A) est relié directement avec le point de liaison entre le deuxième et le troisième commutateur semiconducteur de puissance (S2, S3) et directement avec le point de liaison entre le premier accumulateur d'énergie (2) et le deuxième accumulateur d'énergie (3).

2. Cellule de commutation (1) selon la revendication 1, **caractérisée en ce que** l'élément de commutation avec sens de circulation du courant bidirectionnel commandé (A) présente deux commutateurs semiconducteurs de puissance bidirectionnels commandables branchés en série opposée avec sens de circulation du courant unidirectionnel commandé (S5, S6).

3. Cellule de commutation (1) selon la revendication 1, **caractérisée en ce que** l'élément de commutation avec sens de circulation du courant bidirectionnel commandé (A) présente un commutateur semiconducteur de puissance unidirectionnel commandable avec sens de circulation du courant unidirectionnel commandé (S9) et quatre commutateurs semiconducteurs de puissance unidirectionnels avec sens de circulation du courant unidirectionnel non commandé (D1, D2, D3, D4).

4. Cellule de commutation (1) selon la revendication 1, **caractérisée en ce que** l'élément de commutation avec sens de circulation du courant bidirectionnel commandé (A) présente un premier et un deuxième commutateur semiconducteur de puissance unidirectionnel commandable avec sens de circulation du courant unidirectionnel commandé (S10, S11) ainsi qu'un premier et un deuxième commutateur semiconducteur de puissance unidirectionnel avec sens de circulation du courant unidirectionnel non commandé (D5, D6).

5. Cellule de commutation (1) selon la revendication 4, **caractérisée en ce que** le premier commutateur semiconducteur de puissance unidirectionnel commandable avec sens de circulation du courant unidirectionnel commandé (S10) de l'élément de commutation (A) et le premier commutateur semiconducteur de puissance unidirectionnel avec sens de circulation du courant unidirectionnel non commandé (D5) de l'élément de commutation (A) sont branchés en série,
que le deuxième commutateur semiconducteur de puissance unidirectionnel commandable avec sens de circulation du courant unidirectionnel commandé (S11) de l'élément de commutation (A) et le deuxième commutateur semiconducteur de puissance unidirectionnel avec sens de circulation du courant unidirectionnel non commandé (D6) de l'élément de commutation (A) sont branchés en série, et
que le circuit série constitué du premier commutateur semiconducteur de puissance unidirectionnel commandable avec sens de circulation du courant unidirectionnel commandé (S10) de l'élément de commutation (A) et du premier commutateur semiconducteur de puissance unidirectionnel avec sens de circulation du courant unidirectionnel non commandé (D5) de l'élément de commutation (A) est branché en antiparallèle avec le circuit série constitué du deuxième commutateur semiconducteur de puissance unidirectionnel commandable avec sens de circulation du courant unidirectionnel commandé (S11) de l'élément de commutation (A) et du deuxième commutateur semiconducteur de puissance unidirectionnel avec sens de circulation du courant unidirectionnel non commandé (D6) de l'élément de commutation (A).

6. Cellule de commutation (1) selon la revendication 1, **caractérisée en ce que** l'élément de commutation avec sens de circulation du courant bidirectionnel commandé (A) présente un commutateur semiconducteur de puissance commandable avec sens de circulation du courant bidirectionnel commandé (S12).

7. Cellule de commutation (1) selon l'une des revendications 1 à 6, **caractérisée en ce qu'**au moins un commutateur semiconducteur de puissance (S1.1, S1.2) supplémentaire est inséré en étant branché en série dans la liaison entre le premier commutateur semiconducteur de puissance (S1) et le premier accumulateur d'énergie (2), et
qu'au moins un commutateur semiconducteur de puissance (S4.1, S4.2) supplémentaire est inséré en étant branché en série dans la liaison entre le quatrième commutateur semiconducteur de puissance (S4) et le deuxième accumulateur d'énergie (2), chaque commutateur semiconducteur de puissance supplémentaire (S1.1, S1.2, S4.1, S4.2) étant à chaque fois un commutateur semiconducteur de puissance bidirectionnel commandable avec sens de circulation du courant unidirectionnel commandé.

8. Cellule de commutation (1) selon l'une des revendications 1 à 6, **caractérisée en ce qu'**au moins un commutateur semiconducteur de puissance (S4.1, S4.2) supplémentaire est inséré dans la liaison entre le quatrième commutateur semiconducteur de puissance (S4) et le deuxième accumulateur d'énergie (3), chaque commutateur semiconducteur de puissance supplémentaire (S4.1, S4.2) étant à chaque fois un commutateur semiconducteur de puissance bidirectionnel commandable avec sens de circulation du courant unidirectionnel commandé.

9. Cellule de commutation (1) selon la revendication 8, **caractérisée en ce qu'**en présence d'un seul commutateur semiconducteur de puissance supplémentaire (S4.1), le commutateur semiconducteur de puissance supplémentaire (S4.1) est branché en série opposée par rapport au quatrième commutateur semiconducteur de puissance (S4).

10. Cellule de commutation (1) selon la revendication 8, **caractérisée en ce qu'**en présence de plusieurs commutateurs semiconducteurs de puissance supplémentaires (S4.1, S4.2), au moins un commutateur semiconducteur de puissance supplémentaire (S4.1) est branché en série opposée par rapport au quatrième commutateur semiconducteur de puissance (S4) et au moins un commutateur semiconducteur de puissance supplémentaire (S4.2) est branché en série par rapport au quatrième commutateur semiconducteur de puissance (S4).

11. Cellule de commutation (1) selon l'une des revendications 1 à 6, **caractérisée en ce qu'**au moins un commutateur semiconducteur de puissance (S1.1, S1.2) supplémentaire est inséré dans la liaison entre le premier commutateur semiconducteur de puissance (S1) et le deuxième commutateur semiconducteur de puissance (S2), chaque commutateur semiconducteur de puissance supplémentaire (S1.1, S1.2) étant à chaque fois un commutateur semiconducteur de puissance bidirectionnel commandable avec sens de circulation du courant unidirectionnel commandé.

12. Cellule de commutation (1) selon la revendication 11, **caractérisée en ce qu'**en présence d'un seul commutateur semiconducteur de puissance supplémentaire (S1.1), le commutateur semiconducteur de puissance supplémentaire (S1.1) est branché en série opposée par rapport au premier commutateur semiconducteur de puissance (S1).

13. Cellule de commutation (1) selon la revendication 11, **caractérisée en ce qu'**en présence de plusieurs commutateurs semiconducteurs de puissance supplémentaires (S1.1, S1.2), au moins un commutateur semiconducteur de puissance supplémentaire (S1.1) est branché en série opposée par rapport au premier commutateur semiconducteur de puissance (S1) et au moins un commutateur semiconducteur de puissance supplémentaire (S1.2) est branché en série par rapport au premier commutateur semiconducteur de puissance (S1).

14. Circuit convertisseur destiné à commuter une pluralité de niveaux de tension, comprenant un premier commutateur semiconducteur de puissance (S7) et un deuxième commutateur semiconducteur de puissance (S8) branché en série avec le premier commutateur semiconducteur de puissance (S7), comprenant une cellule de commutation selon l'une des revendications 1 à 13, **caractérisé en ce que** la cellule de commutation (1) est reliée avec le premier commutateur semiconducteur de puissance (S7) du circuit convertisseur et avec le deuxième commutateur semiconducteur de puissance (S8) du circuit convertisseur.

15. Circuit convertisseur selon la revendication 14, **caractérisé en ce que** le premier commutateur semiconducteur de puissance (S7) du circuit convertisseur est relié avec le point de liaison entre le premier commutateur semiconducteur de puissance (S1) de la cellule de commutation (1) et le deuxième commutateur semiconducteur de puissance (S2) de la cellule de commutation (1), et
que le deuxième commutateur semiconducteur de puissance (S8) du circuit convertisseur est relié avec le point de liaison entre le troisième commutateur semiconducteur de puissance (S3) de la cellule de commutation (1) et le quatrième commutateur semiconducteur de puissance (S4) de la cellule de commutation (1).

16. Circuit convertisseur selon la revendication 14 ou 15, **caractérisé en ce que** le premier et le deuxième commutateur semiconducteur de puissance (S7, S8) du circuit convertisseur sont respectivement un commutateur semiconducteur de puissance bidirectionnel commandable avec sens de circulation du courant unidirectionnel commandé.
